# DEMANDE DE BREVET EUROPEEN

(11) **EP 2 705 958 A1**
(43) Date de publication de la demande: **12.03.2014**
(21) Numéro de dépôt: 12306057.6
(22) Date de dépôt: 05.09.2012
(51) Int. Cl.: B42D 25/00, B05D 5/06, B32B 38/14, B44F 9/04, B44F 5/00, G06K 19/08

(54) **Carte à effet visuel marbré et procédé de fabrication associé**

(71) Demandeur: Gemalto SA, 92190 Meudon (FR)
(72) Inventeur: Subra, Sébastien, 92190 Meudon (FR); Karafotis, Stéphane, 92190 Meudon (FR)

(57) **Abrégé**

La présente invention concerne une carte 1 à effet visuel marbré, ladite carte 1 comportant au moins une couche substrat 3 comprenant une première et une seconde face, ladite couche substrat 3 étant recouverte d'une couche de protection 7 translucide, un motif 9 fissuré par lamination étant imprimé sur au moins une des faces de la couche substrat 3 de sorte que la couleur située sous ledit motif 9 soit visible au travers des fissures 11.

## Description

La présente invention concerne la personnalisation graphique de documents, et plus particulièrement la personnalisation graphique de documents multicouches tels que des cartes de norme ISO 7810 afin de leur donner un effet visuel marbré.

Afin de créer un effet visuel marbré sur un document multicouches, il est connu de reproduire sur chaque document un motif marbré composé d'au moins deux couleurs au moyen d'une impression. Cependant, ce motif sera identique pour chaque document imprimé et son rendu peut être altéré par les traitements et protections appliquées postérieurement au document.

Un autre moyen connu de réaliser un effet visuel marbré, est l'impression d'un premier motif sur le document suivit d'une impression d'un second motif avec une encre qui lors de l'évaporation des solvants qu'elle contient, forme des fissures au travers desquelles le premier motif est visible. L'effet visuel marbré est ici aléatoire et son rendu peut également être altéré par les traitements et protections appliquées postérieurement au document. De plus, l'utilisation d'une encre comprenant des solvants permettant la formation de fissures, peut entrainer des surcoûts de fabrication car il y a nécessité d'un temps de séchage pour l'évaporation des solvants afin que l'effet visuel marbré soit satisfaisant.

Un des buts de la présente invention est donc de remédier au moins partiellement aux inconvénients de l'art antérieur et de proposer une carte, notamment de norme ISO 7810, présentant un effet visuel marbré durable, satisfaisant et économique et dont les coûts de fabrication sont limités.

La présente invention concerne donc une carte à effet visuel marbré, ladite carte comportant au moins une couche substrat comprenant une première et une seconde face, ladite couche substrat étant recouverte d'une couche de protection translucide, un motif (9) fissuré par lamination étant imprimé sur au moins une des faces de la couche substrat de sorte que la couleur située sous ledit motif soit visible au travers des fissures.

Le fait que l'encre d'impression du second motif 9 soit fissurée lors de la lamination de la carte 1 par un traitement thermique et mécanique garantit une meilleure durabilité de l'effet marbré car ce dernier est en quelque sorte figé par l'adhésion de la couche de protection 7 et non altéré par la lamination de cette dernière.

Selon un aspect de l'invention, l'encre d'impression du motif comprend :
- 30 à 50% d'hexamethylene diacrylate,
- 20 à 30% de pentaerythritol triacrylate,
- 10 à 30% de 2-methyl-1-4-(methylthio)pheny-2-morpholino-propan-1-one, et
- 1 à 20% de pigments colorés.

Selon un autre aspect de l'invention, la couche substrat comporte un motif préalable imprimé sur au moins une de ses faces et que le motif fissuré par lamination est imprimé directement sur ledit motif préalable.

Selon un autre aspect de l'invention, le motif préalable et le motif sont de couleurs contrastantes.

La présente invention concerne également un procédé de fabrication d'une carte à effet visuel marbré, ledit procédé comprenant les étapes suivantes :
- fourniture d'une couche substrat comprenant une première et une seconde face,
- impression d'un motif sur au moins une des faces de la couche substrat,
- mise en place d'une couche de protection,
- lamination de la carte de sorte à joindre les différentes couches entres elles et à fissurer l'encre du motif afin de rendre visible la couleur située sous ledit motif au travers des fissures du second motif.

Le fait que les fissures 11 se forment lors de l'étape standard de lamination de la carte 1 permet d'intégrer la formation des fissures 11 et ainsi l'effet visuel marbré dans le processus standard de fabrication et ainsi permet de limiter les coûts de fabrication et de réalisation de l'effet visuel marbré

Selon un aspect du procédé, l'encre d'impression du motif comprend :
- 30 à 50% d'hexamethylene diacrylate,
- 20 à 30% de pentaerythritol triacrylate,
- 10 à 30% de 2-methyl-1-4-(methylthio)pheny-2-morpholino-propan-1-one, et
- 1 à 20% de pigments colorés.

Selon un autre aspect du procédé, suite à l'étape d'impression du motif, ledit motif subit une étape d'insolation ultraviolet.

Selon un autre aspect du procédé, la couche substrat comporte un motif préalable imprimé sur au moins une de ses faces et que l'impression du motif est réalisée au moins en partie directement sur ledit motif préalable.

Selon un autre aspect du procédé, l'étape de lamination comporte au moins:
- un premier traitement à une température comprise entre 110 et 150°C avec une pression de 80 à 120N/cm² pendant 10 à 20 min,
- un second traitement à une température comprise entre 16 et 20°C avec une pression de 180 à 220N/cm² pendant 10 à 20 min.

Selon un autre aspect du procédé, l'impression du motif est réalisée par impression jet d'encre.

Selon un autre aspect du procédé, l'insolation ultraviolet est réalisée simultanément avec l'impression du motif.

D'autres caractéristiques et avantages de l'invention apparaîtront plus clairement à la lecture de la description suivante, donnée à titre d'exemple illustratif et non limitatif, et des dessins annexés parmi lesquels
- la figure 1 montre une représentation schématique en coupe d'une carte selon l'invention,
- la figure 2 montre une représentation schématique en vue de dessus de la carte de la figure 1.

Sur les différentes figures, les éléments identiques portent les mêmes numéros de référence.

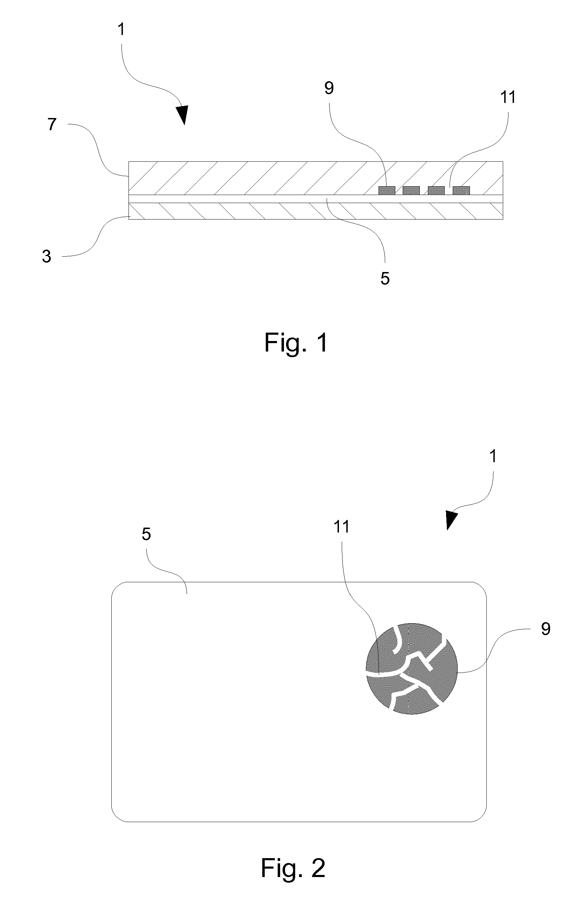

La figure 1 montre une représentation schématique en coupe d'une carte 1 de norme ISO 7810. Cette carte 1 peut par exemple être une carte bancaire de paiement, d'identification, d'identité ou encore une carte magnétique, à puce ou à communication en champ proche (NFC pour l'acronyme anglais de Nier Field Communication).

La carte 1 comporte une couche substrat 3 comprenant une première et une seconde face. Sur au moins une des première et seconde faces peut être imprimé un motif préalable 5. La couche substrat 3 peut être composé d'une seule et unique couche ou alors être composé d'une superposition de différentes couches constitutives de la carte 1, par exemple en intégrant une puce et une antenne pour le NFC. Le motif préalable 5 est une impression standard d'un motif, connue de l'homme du métier et réalisée communément lors d'une étape de personnalisation graphique d'une carte 1. Le motif préalable 5 peut recouvrir tout ou partie de la couche substrat 3.

Sur au moins une des faces de la couche substrat 3 est imprimé un motif 9 fissuré par lamination. Dans le cas où la couche substrat 3 comporte un motif préalable 5, le motif 3 peut être imprimé directement sur ledit motif préalable 5. Les fissures 11 du motif 9 sont telles que la couleur située sous ledit motif 9 est visible au travers de ces dernières dans le but de créer l'effet visuel marbré. Afin que cet effet visuel marbré soit plus perceptible il est possible d'utiliser des couleurs contrastantes pour les différents motifs 5 et 9 ou d'utiliser une couleur pour l'impression du motif 9 qui contraste avec celle de la couche substrat 3, lorsqu'il est imprimé directement sur cette dernière. Le motif 9 peut recouvrir tout ou partie du motif préalable 5 ou de la couche substrat 3.

La couche substrat 3 ainsi que les différents motifs 5, 9 sont généralement recouverts d'une couche de protection 7 translucide. La figure 2 montre la carte 1 de la figure 1 en vue de dessus avec le motif 9 et le motif préalable 5 visibles au travers de la couche de protection 7. La couleur du motif préalable 5 est visible au travers des fissures 11.

L'encre d'impression utilisée pour réaliser le motif 9, a avantageusement une formulation comprenant :
- 30 à 50% d'hexamethylene diacrylate de référence CAS (acronyme anglais de Chemical Abstracts Service) 13048-33-8,
- 20 à 30% de pentaerythriol triacrylate de référence CAS 3524-68-3,
- 1 0 à 3 0 % d e 2-methyl-1-4-(methylthio)pheny-2-morpholino-propan-1-one de référence CAS 71868-10-5, et
- 1 à 20% de pigments colorés.

L'hexamethylene acrylate est un composé polymérisateur couramment utilisé dans le domaine des encres afin de renforcer l'adhésion de cette dernière. Le pentaerythriol triacrylate est quand à lui un durcisseur qui permet l'amélioration de la résistance de l'impression. Le 2-methyl-1-4-(methylthio)pheny-2-morpholino-propan-1-one est un photo-initiateur ultra-violet de polymérisation. Et enfin, les pigments colorés sont les éléments donnant la couleur à l'encre d'impression du motif 9. Ces pigments colorés peuvent par exemple être du noir de carbone en proportion de 1 à 5 % dans la formulation de l'encre pour une couleur noire ou alors du dioxyde de titane en proportion de 10 à 20% dans la formulation de l'encre pour une couleur blanche.

L'encre d'impression du motif 9 telle que formulée ci-dessus est durcie par isolation UV et ne forme pas de fissures 11 lors de ce durcissement. Les fissures 11 sont réalisées par un traitement thermique et mécanique appliqué sur le motif 9. Ce traitement est avantageusement réalisé par le traitement de lamination de la carte 1 afin de faire adhérer les différentes couches qui la compose entre elles, notamment pour faire adhérer la couche de protection 7. Le fait que l'encre d'impression du motif 9 soit fissurée lors de la lamination de la carte 1 par un traitement thermique et mécanique garantit une meilleure durabilité de l'effet marbré car ce dernier est en quelque sorte figé par l'adhésion de la couche de protection 7 et non altéré par la lamination de cette dernière.

L'invention concerne également un procédé de fabrication d'une carte 1 à effet visuel marbré comprenant les étapes suivantes :

Une étape de fourniture d'une couche substrat 3 comme décrite précédemment dont au moins une face peut comporter un motif préalable5 imprimé.

Une étape d'impression du motif 9 sur au moins une partie d'au moins une des faces de la couche substrat ou du premier motif 5 au moyen d'une encre de formulation :
- 30 à 50% d'hexamethylene diacrylate de référence CAS (acronyme anglais de Chemical Abstracts Service) 13048-33-8,
- 20 à 30% de pentaerythriol triacrylate de référence CAS 3524-68-3,
- 1 0 à 3 0 % d e 2-methyl-1-4-(methylthio)pheny-2-morpholino-propan-1-one de référence CAS 71868-10-5, et
- 1 à 20% de pigments colorés.

Avantageusement, cette seconde étape d'impression est réalisée par impression jet d'encre.

Une étape d'insolation UV du motif 9 afin de faire durcir l'encre.

Une étape de mise en place d'une couche de protection 7 sur la ou les faces imprimées de la couche substrat 3.

Et enfin une étape de lamination de la carte 1. Lors de cette lamination, les différentes couches, notamment la couche substrat 3 et la ou les couches de protection 7 sont jointes entre-elle. De plus, cette étape de lamination provoque la formation de fissures 11 sur le motif 9 afin de rendre visible la couleur située sous ledit motif 9 au travers desdites fissures 11.

Le fait que les fissures 11 se forment lors de l'étape de lamination standard de lamination d'une carte 1 multicouche permet d'intégrer la formation des fissures 11 et ainsi l'effet visuel marbré dans le processus standard de fabrication et ainsi permet de limiter les coûts de fabrication et de réalisation de l'effet visuel marbré. Les coûts sont d'autant plus limités que l'étape d'isolation UV peut être réalisée simultanément à l'impression du motif 9.

Préférentiellement et afin de former des fissures 11 suffisamment importantes pour permettre la vision de la couleur située sous le motif 9 tout en assurant une liaison des différentes couches entres elles, le traitement de lamination comporte :
- un premier traitement à une température comprise entre 110 et 150°C avec une pression de 80 à 120N/cm² pendant 10 à 20 min,
- un second traitement à une température comprise entre 16 et 20°C avec une pression de 180 à 220N/cm² pendant 10 à 20 min.

Ainsi, on voit bien que, du fait de l'utilisation d'une encre de formulation particulière pour l'impression du motif 9 et de la formation de fissures 11 lors de l'étape de lamination standard, la carte 1 obtient un effet visuel marbré durable et que son procédé de fabrication permet de limiter les coûts de réalisation d'un tel effet visuel marbré.

## Revendications

1. Carte (1) à effet visuel marbré, ladite carte (1) comportant au moins une couche substrat (3) comprenant une première et une seconde face, ladite couche substrat (3) étant recouverte d'une couche de protection (7) translucide, **caractérisée en ce qu'**un motif (9) fissuré par lamination est imprimé sur au moins une des faces de la couche substrat (3) de sorte que la couleur située sous ledit motif (9) soit visible au travers des fissures (11).

2. Carte (1) selon la revendication 1, **caractérisée en ce que** l'encre d'impression du motif (9) comprend :
- 30 à 50% d'hexamethylene diacrylate,
- 20 à 30% de pentaerythritol triacrylate,
- 10 à 30% de 2-methyl-1-4-(methylthio)pheny-2-morpholino-propan-1-one, et
- 1 à 20% de pigments colorés.

3. Carte (1) selon la revendication 1, **caractérisée en ce que** la couche substrat (9) comporte un motif préalable (5) imprimé sur au moins une des ses faces et que le motif (9) fissuré par lamination est imprimé directement sur ledit motif préalable (5).

4. Carte (1) selon la revendication 1, **caractérisée en ce que** le motif préalable (5) et le motif (9) sont de couleurs contrastantes.

5. Procédé de fabrication d'une carte (1) à effet visuel marbré, ledit procédé comprenant les étapes suivantes :
- fourniture d'une couche substrat (3) comprenant une première et une seconde face,
- impression d'un motif (9) sur au moins une des faces de la couche substrat (3),
- mise en place d'une couche de protection (7) sur la ou les faces imprimées de la couche substrat (3),
- lamination de la carte (1) de sorte à joindre les différentes couches (3, 7) entres elles et à fissurer l'encre du motif (9) afin de rendre visible la couleur située sous ledit motif (9) au travers des fissures (11) du second motif (9).

6. Procédé de fabrication selon la revendication 5, **caractérisé en ce que** l'encre d'impression du motif (9) comprend :
- 30 à 50% d'hexamethylene diacrylate,
- 20 à 30% de pentaerythritol triacrylate,
- 10 à 30% de 2-methyl-1-4-(methylthio)pheny-2-morpholino-propan-1-one, et
- 1 à 20% de pigments colorés.

7. Procédé de fabrication selon la revendication 5, **caractérisé en ce que** suite à l'étape d'impression du motif (9), ledit motif (9) subit une étape d'insolation ultraviolet.

8. Procédé de fabrication selon la revendication 5, **caractérisé en ce que** la couche substrat (9) comporte un motif préalable (5) imprimé sur au moins une de ses faces et que l'impression du motif (9) est réalisée au moins en partie directement sur ledit motif préalable (5).

9. Procédé de fabrication selon la revendication 5, **caractérisé en ce que** l'étape de lamination comporte au moins:
- un premier traitement à une température comprise entre 110 et 150°C avec une pression de 80 à 120N/cm² pendant 10 à 20 min,
- un second traitement à une température comprise entre 16 et 20°C avec une pression de 180 à 220N/cm² pendant 10 à 20 min.

10. Procédé de fabrication selon la revendication 5, **caractérisé en ce que** l'impression du motif (9) est réalisée par impression jet d'encre.

11. Procédé de fabrication selon la revendication 5, **caractérisé en ce que** l'insolation ultraviolet est réalisé simultanément avec l'impression du motif (9).
